# FASCICULE DE BREVET EUROPEEN

(11) **EP 2 491 066 B1**
(45) Date de publication et mention de la délivrance du brevet: **27.01.2016**
(21) Numéro de dépôt: 10766056.5
(22) Date de dépôt: 18.10.2010
(51) Int. Cl.: C08G 8/04, C08L 77/00, C08L 61/06

(54) **COMPOSITION POLYAMIDE MODIFIÉE COMPRENANT AU MOINS UN COMPOSÉ PHÉNOLIQUE**
MODIFIZIERTE POLYAMIDZUSAMMENSETZUNG MIT MINDESTENS EINER PHENOLVERBINDUNG
MODIFIED POLYAMIDE COMPOSITION CONTAINING AT LEAST ONE PHENOLIC COMPOUND

(30) Priorité: 20.10.2009 FR 0957322
(43) Date de publication de la demande: 29.08.2012
(73) Titulaire: Rhodia Operations, 93306 Aubervilliers (FR); CNRS, 75794 Paris Cedex 16 (FR)
(72) Inventeur: VERGELATI, Caroll, F-38118 Saint-Baudille de la Tour (FR); ANDRES, Olivier, F-69780 Mions (FR); SCHANEN, Vincent, F-69006 Lyon (FR); ODONI, Ludovic, F-69140 Rillieux-la-Pape (FR); SOTTA, Paul, F-69002 Lyon (FR); LONG, Didier, F-69110 Sainte-Foy-lès-Lyon (FR)
(74) Mandataire: Benvenuti, Federica
(86) Numéro de dépôt international: PCT/EP2010/065647
(87) Numéro de publication internationale: WO 2011/048055

(56) Documents cités:
- WO-A1-2009/155747
- FR-A1- 2 921 069
- GB-A- 1 092 086

## Description

La présente invention concerne l'utilisation d'un composé phénolique pour la fabrication d'un polyamide modifié ayant des propriétés mécaniques augmentées. L'invention concerne également une composition polyamide comprenant au moins un tel composé phénolique et éventuellement des charges de renfort ou de remplissage. La composition est préférentiellement une composition à mouler, par exemple sous forme de granulés ou de poudre, servant à la fabrication d'articles par un procédé de moulage par injection.

Les polyamides techniques sont utilisés pour la réalisation de nombreux articles dans différents domaines, comme le domaine de l'automobile, où des propriétés spécifiques de rigidité, de résistance aux chocs, de stabilité dimensionnelle, en particulier à température relativement élevée, d'aspect de surface, de densité et de poids sont particulièrement recherchées. Le choix d'un matériau pour une application donnée est généralement guidé par le niveau de performances exigées vis-à-vis de certaines propriétés et par son coût. On cherche en effet toujours de nouveaux matériaux susceptibles de répondre à un cahier des charges en terme de performance et/ou de coûts.

Il est connu d'utiliser par ailleurs la résine novolak dans des compositions polyamide pour diminuer leur reprise en eau et accroitre la stabilité dimensionnelle des articles mis en forme. Toutefois, la résine novolak induit une diminution significative de certaines propriétés mécaniques de la matrice polyamide. Il existait ainsi un besoin de mettre au point des compositions polyamides présentant un très bon compromis entre la reprise en eau et les propriétés mécaniques.

La demanderesse vient de découvrir de manière tout a fait surprenante que l'utilisation d'un composé phénolique particulier dans une composition polyamide permettait l'obtention de nouveaux compromis de propriétés quant à la maîtrise de la stabilité dimensionnelle dont la signature sur le matériau est une meilleure inhibition de l'absorption d'eau, et de bien meilleures propriétés mécaniques.

La présente invention concerne ainsi une composition polyamide comprenant au moins un polyamide et un composé phénolique polymère de l'invention, et éventuellement des charges de renfort ou de remplissage et éventuellement des additifs classiquement utilisés dans le domaine.

L'invention concerne également l'utilisation d'un composé phénolique polymère de l'invention comme agent de renfort de chocs du polyamide. L'invention concerne ainsi également l'utilisation d'un tel composé phénolique pour la fabrication d'un polyamide modifié présentant des propriétés mécaniques augmentées.

La présente invention concerne également un composé phénolique polymère comprenant au moins des motifs de formule (I) : 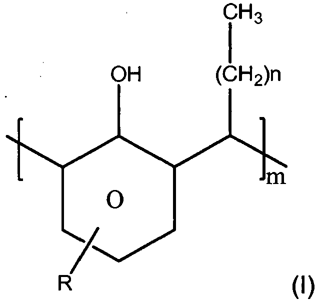 dans laquelle R représente un atome d'hydrogène ou un groupement alkyle linéaire ou ramifié comprenant de 1 à 20 atomes de carbone comprenant éventuellement des hétéroatomes, m est compris entre 6 et 15, et n est compris entre 5 et 22.

Préférentiellement le groupement alkyle linéaire ou ramifié comprend de 1 à 10 atomes de carbone. Préférentiellement les hétéroatomes sont l'oxygène ou l'azote. R est plus préférentiellement un atome d'hydrogène, un méthyle, un éthyle, un propyl, un butyl ou un octyle.

m est plus préférentiellement compris entre 8 et 12, et peut prendre notamment les valeurs de 8, 9, 10, 11 ou 12, ou n'importe quel intervalle compris entre ces valeurs. n est plus préférentiellement compris entre 10 et 15, notamment les valeurs de 10, 11, 12, 13, 14 ou 15, ou n'importe quel intervalle compris entre ces valeurs.

Le composé phénolique de l'invention peut également être un polymère comprenant au moins des motifs de formule (I) et également des motifs de formule (II): 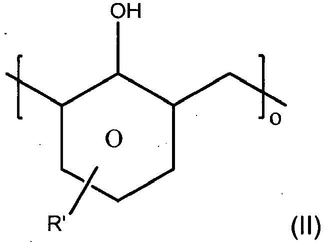 dans laquelle R' représente un atome d'hydrogène ou un groupement alkyle linéaire ou ramifié comprenant de 1 à 20 atomes de carbone comprenant éventuellement des hétéroatomes, et o est compris entre 6 et 15. R et R' peuvent être indépendant l'un de l'autre, ou équivalent. o peut prendre notamment les valeurs de 6, 7, 8, 9, 10, 11, 12, 13, 14 ou 15 ou n'importe quel intervalle compris entre ces valeurs.

Ce composé peut notamment alors être un polymère statistique.

Des mélanges de composés phénoliques selon l'invention peuvent notamment être utilisés pour la réalisation de la composition selon l'invention.

Le composé phénolique polymère de l'invention comprenant au moins des motifs représentés par la formule (I) et éventuellement des motifs représentés par la formule (II) peut être fabriqué de diverses manières. On peut notamment utiliser les procédés classiquement utilisés pour la fabrication des résines novolak.

L'invention concerne aussi un procédé de fabrication d'un composé phénolique polymère comprenant au moins une étape de condensation en présence d'au moins un composé phénolique avec un aldéhyde comprenant de 7 à 25 atomes de carbone.

L'invention concerne aussi pour la fabrication d'un polymère comprenant au moins des motifs représentés par la formule (I) et également des motifs représentés par la formule (II) comprenant au moins une étape de condensation en présence d'au moins un composé phénolique avec un aldéhyde comprenant de 7 à 25 atomes de carbone et un formaldéhyde.

Le rapport molaire de l'aldéhyde comprenant de 7 à 25 atomes de carbone et du formaldéhyde est préférentiellement compris entre 0,25 et 1.

La température de la réaction est généralement effectuée à une température comprise entre 50 et 250°C, préférentiellement entre 80 et 160°C.

On peut généralement utiliser comme solvant tout solvant non réactif dans les conditions de synthèse, idéalement des solvants permettant d'éliminer l'eau par distillation azéotropique tels que le toluène, le chlorobenzene, ou l'orthodichlorobenzene. L'usage d'un solvant n'est toutefois pas indispensable.

Ces réactions de condensation sont généralement catalysées par un acide ou une base. On peut utiliser différents types de catalyseurs tels que HCl, H₂SO₄, H₃PO₄, l'acide oxalique, l'acide formique, l'acide acétique, la NaoH, et le KOH par exemple.

Les composés phénoliques peuvent être choisis seuls ou en mélange parmi le phénol, le crésol, le xylénol, le naphtol, les alkylphénols, comme le butyl-phénol, le terbutyl-phénol, l'isooctyl-phénol, le nitrophénol, le phénylphénol, le résorcinol ou le biphénol A ; ou tout autre phénol substitué.

On peut notamment utiliser les aldéhydes suivants : l'heptaldehyde, l'octylaldehyde (ou caprylic aldehyde ou octanal), le nonyl aldehyde (ou nonanal), le decaldehyde (ou decanal), l'undecaldehyde, le dodecyl aldehyde (ou laurinaldéhyde), le palmitaldehyde (ou hexadecanal), le stearaldehyde (ou octadecanal).

Les composés de l'invention ont avantageusement un poids moléculaire compris entre 1500 et 3000 g/mol.

La composition polyamide selon l'invention comprend généralement de 1 à 20 % en poids de composé phénolique, préférentiellement de 2 à 8 % en poids, par rapport au poids total de la composition.

Selon la présente invention, la composition polyamide peut être obtenue de diverses manières connues pour l'ajout de charges et d'additifs dans une composition polyamide.

On peut par exemple la fabriquer par ajout du composé phénolique en polymérisation à l'état fondu du polyamide, en présence des monomères du polyamide. On peut également ajouter le composé phénolique en mélange a chaud avec le polyamide, notamment formé ou partiellement formé, par exemple à l'extrudeuse, notamment avec d'autres composés. On peut également ajouter le composé phénolique en phase solide, notamment lors d'une post-condensation du polyamide.

Le polyamide de l'invention peut être un polyamide ou copolyamide semi-cristallins ou amorphes, tels que les polyamides aliphatiques, polyamides semi-aromatiques et plus généralement, les polyamides linéaires obtenus par polycondensation entre un diacide aliphatique ou aromatique, et une diamine primaire aromatique ou aliphatique, les polyamides obtenus par condensation d'un lactame, d'un aminoacide ou les polyamides linéaires obtenus par condensation d'un mélange de ces différents monomères.

Plus précisément, ces copolyamides peuvent être, par exemple, le polyadipamide d'hexaméthylène, les polyphtalamides obtenus à partir d'acide téréphtalique et/ou isophtalique, les copolyamides obtenus à partir d'acide adipique, d'hexaméthylène diamine et de caprolactame.

Le polyamide est préférentiellement choisi dans le groupe comprenant les polyamides obtenus par polycondensation d'au moins un diacide carboxylique linéaire avec une diamine linéaire ou cyclique comme le PA 6.6, PA 6.10, PA 6.12, PA 12.12, PA 4.6, ou entre au moins un diacide carboxylique aromatique et une diamine linéaire ou aromatique comme les polytéréphtalamides, polyisophtalamides, polyaramides, les polyamides obtenus par polycondensation d'au moins un aminoacide sur lui-même, l'amino-acide pouvant être généré par l'ouverture hydrolytique d'un cycle lactame tels que, par exemple PA 6, PA 7, PA 11, PA 12.

La composition de l'invention peut également comprendre les copolyamides dérivés notamment des polyamides ci-dessus, ou les mélanges de ces polyamides ou copolyamides.

Les polyamides préférés sont le choisis dans le groupe comprenant : le PA 66, le PA 610, le PA 612, le PA 6.66, le PA 46, le MXD6, le PA 66/6T, le PA 6, le PA 11, et le PA 12.

On utilise généralement des polyamides de poids moléculaires adaptés aux procédés de moulage par injection, bien que l'on puisse utiliser aussi des polyamides de plus faibles ou de plus hautes viscosités.

Le polyamide peut notamment être un polymère comprenant des chaînes macromoléculaires étoiles ou H, branché, ramifié, hyper-ramifié, et le cas échéant des chaînes macromoléculaires linéaires. Les polymères comprenant de telles chaînes macromoléculaires étoiles ou H sont par exemple décrits dans les documents FR2743077, FR2779730, US5959069, EP0632703, EP0682057 et EP0832149.

Le polyamide peut être un polymère de type arbre statistique, de préférence un copolyamide présentant une structure arbre statistique. Ces copolyamides de structure arbre statistique ainsi que leur procédé d'obtention sont notamment décrits dans le document WO99/03909. La matrice de l'invention peut également être une composition comprenant un polymère thermoplastique linéaire et un polymère thermoplastique étoile, H et/ou arbre tels que décrits ci-dessus. La matrice de l'invention peut également comprendre un copolyamide hyperbranché du type de ceux décrits dans le document WO 00/68298. La composition de l'invention peut également comprendre toute combinaison de polymère thermoplastique linéaire, étoile, H, arbre, copolyamide hyperbranché tel que décrit ci-dessus.

La composition selon l'invention présente préférentiellement de 30 à 95 % en poids de polyamide, préférentiellement de 40 à 80 % en poids, par rapport au poids total de la composition.

La composition peut également comprendre, selon la propriété finale souhaitée, un mélange de polyamide et un ou plusieurs autres polymères, tel que par exemple un autre polyamide, du polyéthylène, du polystyrène, du polypropylène, de la résine ABS, du polycarbonate, du sulfure de polyphénylène, de l'oxyde de polyphénylène, du polyacétal, du polysulfone, de la polyéthersulfone, du polyétherimide, de la polyéthercétone, une résine d'acide polylactique, une résine de polysulfone, une résine élastomère ou des mélanges de ceux-ci.

Les charges de renfort ou de remplissages selon la présente invention, peuvent être par exemple des charges fibreuses et/ou des charges non fibreuses.

Comme charge fibreuses on peut citer les fibres de verre, les fibres de carbone, les fibres naturelles, les fibres d'aramides, et les nanotubes, notamment de carbone. On peut citer comme fibres naturelles le chanvre et le lin. Parmi les charges non fibreuses on peut notamment citer toutes les charges particulaires, lamellaires et/ou les nanocharges exfoliables ou non exfoliables comme l'alumine, le noir de carbone, les argiles alumino-silicates, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

Il est parfaitement possible selon l'invention que la composition comprenne plusieurs types de charges de renfort. De façon préférentielle, la charge la plus utilisée peut être les fibres de verres, du type dit coupé (chopped), notamment ayant un diamètre compris entre 7 et 14 µm. Ces charges peuvent présenter un ensimage surfacique qui assure l'adhésion mécanique entre les fibres et la matrice polyamide.

La concentration pondérale des charges de renfort ou de remplissage est comprise avantageusement entre 1 % et 60 % en poids par rapport au poids total de la composition, de préférence entre 15 et 50 %.

La composition selon l'invention peut en outre comprendre des additifs classiquement utilisés pour la fabrication de compositions polyamides. Ainsi, on peut citer les lubrifiants, les agents ignifugeants, les plastifiants, les agents nucléants, les agents modificateurs de chocs, les catalyseurs, les stabilisants lumière et/ou thermique, les antioxydants, les antistatiques, les colorants, les matifiants, les additifs d'aide au moulage ou autres additifs conventionnels.

On peut notamment ajouter à la composition polyamide des agents modifiants la résistance aux chocs. Ce sont généralement des polymères d'élastomères qui peuvent être utilisés à cet effet. Les agents modificateurs de la résilience sont généralement définis comme ayant un module de traction ASTM D-638 inférieur à environ 500 MPa. Des exemples d'élastomères convenables sont les éthylène-ester acrylique-anhydride maléïque, les ethylène-propylène-anhydride maléïque, les ethylène-propylène-diène momonère (EPDM) avec éventuellement un anhydride maléïque greffé. La concentration pondérale en élastomère est avantageusement comprise entre 0,1 et 30 % par rapport au poids total de la composition.

On préfère notamment les agents modificateurs de chocs comprenant des groupements fonctionnels réactifs avec le polyamide. On peut par exemple citer les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées. La proportion en poids de ces agents dans la composition totale est notamment comprise entre 0,1 et 40 %.

Ces charges et additifs peuvent être ajoutés au polyamide modifié par des moyens usuels adaptés à chaque charge ou additif, tel que par exemple lors de la polymérisation ou en mélange en fondu.

Les matériaux et compositions de l'invention sont généralement obtenus par mélange des différents constituants à chaud, par exemple dans une extrudeuse mono ou bivis, à une température suffisante pour maintenir la résine polyamide en milieu fondu ; ou a froid dans un mélangeur mécanique notamment. Généralement, le mélange obtenu est extrudé sous forme de joncs qui sont coupés en morceaux pour former des granulés. Les composés peuvent être ajoutés à n'importe quel moment du processus de fabrication du matériau plastique, notamment par mélange à chaud ou à froid avec la matrice plastique. L'addition des composés et des additifs, comme les composés phénoliques, peut être réalisée par ajout de ces composés dans la matrice plastique fondue sous forme pure ou sous forme de mélange concentré dans une matrice telle que par exemple une matrice plastique.

La composition est préférentiellement une composition à mouler, par exemple sous forme de granulés ou de poudre, servant notamment à la fabrication d'articles par un procédé de moulage par injection. La composition selon l'invention peut être utilisée pour tout procédé de mise en forme des matières plastiques, tels que par exemple les procédés de moulage, notamment le moulage par injection, le rotomoulage, le frittage, la coulée, ou d'extrusion comme l'extrusion soufflage et le filmage, ou encore les procédés de filage. L'invention concerne ainsi aussi des procédés de fabrication d'articles moulés ou extrudés par mise en forme d'une composition de l'invention.

La présente invention concerne notamment aussi un procédé de moulage par injection dans lequel on introduit dans un dispositif de moulage par injection une composition selon l'invention, notamment sous forme de granulés, et l'on procède au moulage.

L'utilisation des compositions selon l'invention est particulièrement intéressante dans le cadre de la fabrication d'articles pour l'industrie automobile ou électrique.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

### Exemple 1: Synthèse d'un Polymère comprenant des motifs de formule (I)

Dans un réacteur parfaitement agité, ont été chargé : 141 g (1,5 mole) de phénol et 276 g (1,5 mole) de laurinaldéhyde. 4,9 g de solution de NaOH à 50 % dans l'eau est alors ajouté en tant que catalyseur. On effectue une montée en température jusqu'à 100-110°C et l'obtention d'un milieu homogène liquide. On maintien à 100-110°C durant 14 h. Les réactifs non réagis et l'eau formée sont éliminés par distillation sous vide (1-10 mbar 120°C). On obtient 56 g de distillat. Le produit obtenu est liquide (311 g) visqueux à 80°C et de couleur jaune orangé.

Le produit est caractérisé par RMN-1H dans CDCl3 : multiplets à 7,3 / 6,9 / 4,8 / 0,8 à 2,2

### Exemple 2: Synthèse d'un polymère comprenant des motifs de formule (I) et de formule (II)

Synthèse en catalyse basique. Dans un réacteur parfaitement agité, on a chargé 94 g (1 mole) de phénol, 138,2 g (0,75 mole) de laurinaldéhyde et 60,8 g (0,75 mole) d'une solution HCOH à 37 % masse. 3,3 g de solution de NaOH à 50 % dans l'eau est alors ajouté en tant que catalyseur. On effectue une montée en température jusqu'à 90-100°C avec distillation en continue de l'eau introduite et formée. On maintien à 90-100°C durant 6 h. Le milieu est biphasique. Le milieu réactionnel est concentré sous vide (10 mbar) à une température de 90°C. Quelques solides sont séparés. Le produit obtenu est liquide (195 g) visqueux à 80°C de couleur orangé.

Le produit est caractérisé par RMN-1H dans CDCl3 : multiplets à 8,8 / 6,8 à 5,4 / 4,8 / 2,2 à 0,5

### Exemple 3: Synthèse d'un polymère comprenant des motifs de formule (I) et de formule (II)

Synthèse en catalyse acide. Dans un réacteur parfaitement agité, ont été chargé:
- le phénol : 94 g (1 mole)
- 1 % massique d'acide oxalique

On effectue une montée en température jusqu'à 100°C. Un mélange de 138,2 g (0,75 mole) de laurinaldéhyde et 60,8 g (0,75 mole) d'une solution HCOH à 37 % masse est ensuite coulé en quelques heures. On maintien à 100°C durant 5 h. La finition de la réaction est obtenue par montée progressive, durant quelques heures, de la température jusqu'à 150-180°C. Le milieu réactionnel est concentré sous vide (10 mbar) dans une fenêtre de températures de 100-150°C. Le produit obtenu est liquide (195 g) et visqueux à 80°C de couleur orangé.

Le produit est caractérisé par RMN-1H dans CDCl3 : multiplets à 8,8 / 6,8 à 5,4 / 4,8 / 2,2 à 0,5.

Les 2 types de résines ont des masses moléculaires moyennes en nombre (Mn) de l'ordre de 2000-2200 g/mol. Ceci correspond à des structures oligomériques de degré de polymérisation compris entre 8 et 12 (analyse GPC).

### Exemple 4 : Fabrication des compositions

Des compositions à base de polyamide (PA 66 27AD1 de la société Rhodia, ayant un IV de 140 ml/g selon la norme ISO 307) et de 4 % en poids de résine novolak (Phénol-Formaldéhyde Rhenosin PR95) ou d'un composé de l'exemple 1 ou 2 sont obtenues par extrusion sur une mini extrudeuse double-vis PRISM 25D. Les caractéristiques de la mise en oeuvre sont les suivantes :
Mini Extrudeuse double vis : PRISM 25D , avec
   - un profil de température : 275 - 280 - 275 - 275 - 275°C
   - vitesse de vis (rpm): 250
   - force moteur (N.m) : 16
   - vide : - 0,3 bar

Les joncs sortis de l'extrudeuse sont coulés dans un bac de refroidissement à eau et ensuite granulés. Des éprouvettes sont réalisées par moulage par injection de la manière suivante :
Mini Presse BOY 12M, 12 tonnes, vis de 18 mm
T (°C) fourreau: de 270 à 285
T (°C) moule : 70
Vitesse d'injection (m/s) : 100
Pression d'injection (bar) : 50
Pression de maintien (bar) : 25
Contre pression (bar) : 3
Vitesse de vis (rpm) : 220

Les éprouvettes sont ensuite conditionnées à deux degrés d'hygrométrie distincts HR0 et HR50 (HR=humidité relative).

### Exemple 5 : analyse des formulations

Différents tests ont été effectués sur les formulations produites dans l'exemple 4. Les résultats sont exprimés dans le tableau 1 suivant :

**Tableau 1**

| **Systèmes** | **PA6,6 Témoin** | **+ 4% Résine Novolac** | **+ 4% Résine Ex 1** | **+ 4% Résine Ex 2** |
|---|---|---|---|---|
| Reprise en Eau (RH50) (% w/w) | 3,06 (---) | 2,77 (- 9,2%) | 2,76 (- 9,4%) | 2,83 (- 7,4%) |
| Résistance à l'Impact RH0 (kJ/m²) | 5,0 (---) | 3,5 (-30%) | 7,2 (+44%) | 5,5 (+10%) |
| Résistance à l'Impact RH50 (kJ/m²) | 25,0 (---) | 11,5 (-54 %) | 21,0 (-16%) | 23,0 (-8%) |

Les mesures d'absorption d'eau sont réalisées selon le norme ISO 1110.

Les mesures de résistance à l'impact sont réalisées selon la norme ISO 179-1/1eA.

A RH0, les compositions à base des nouvelles typologies de résines présentent une résistance à l'impact supérieure à très supérieure à celle de la matrice PA6,6 témoin ainsi qu'à celle d'une matrice PA6,6 additivée par une résine Novolac classique. A RH50, bien que beaucoup moins plastifiées que la matrice PA6,6 témoin (reprise en eau plus faible), les compositions à base de ces nouvelles résines présentent une résistance à l'impact proche de celle de la matrice de référence. On constate par ailleurs que la composition à base d'une résine Novolac classique est plus pénalisée vis-à-vis de cette propriété.

## Revendications

1. Composé phénolique polymère comprenant au moins des motifs de formule (I) : 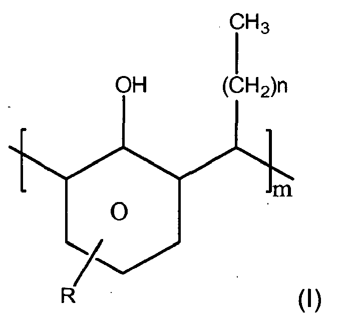 dans laquelle R représente un atome d'hydrogène ou un groupement alkyle linéaire ou ramifié comprenant de 1 à 20 atomes de carbone comprenant éventuellement des hétéroatomes, m est compris entre 6 et 15, et n est compris entre 5 et 22.

2. Composé phénolique polymère selon la revendication 1 **caractérisé en ce que** m est compris entre 8 et 12.

3. Composé phénolique polymère selon la revendication 1 ou 2 **caractérisé en ce que** n est compris entre 10 et 15.

4. Composé phénolique polymère selon l'une quelconque des revendications 1 à 3 comprenant en outre des motifs de formule (II): 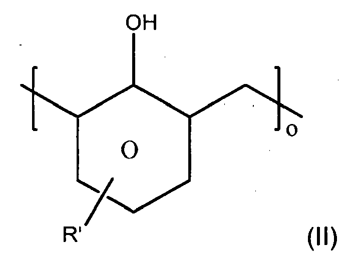 dans laquelle R' représente un atome d'hydrogène ou un groupement alkyle linéaire ou ramifié comprenant de 1 à 20 atomes de carbone comprenant éventuellement des hétéroatomes, et o est compris entre 6 et 15.

5. Composé phénolique polymère selon l'une quelconque des revendications 1 à 4 présentant un poids moléculaire compris entre 1500 et 3000 g/mol.

6. Procédé de fabrication d'un composé phénolique polymère selon l'une quelconque des revendications 1 à 5, comprenant au moins une étape de condensation en présence d'au moins un composé phénolique avec un aldéhyde comprenant de 7 à 25 atomes de carbone.

7. Procédé selon la revendication 6, **caractérisé en ce que** l'étape de condensation est effectuée en présence d'au moins un composé phénolique avec un aldéhyde comprenant de 7 à 25 atomes de carbone et un formaldéhyde.

8. Procédé selon les revendications 6 ou 7 **caractérisé en ce que** la température de l'étape de condensation est comprise entre 50 et 250°C.

9. Procédé selon l'une quelconque des revendications 6 à 8, **caractérisé en ce que** le composé phénolique est choisi dans le groupe constitué par le phénol, le crésol, le xylénol, le naphtol, le butyl-phénol, le terbutyl-phénol, l'isooctyl-phénol, le nitrophénol, le phénylphénol, le résorcinol ou le biphénol A.

10. Procédé selon l'une quelconque des revendications 6 à 9, **caractérisé en ce que** l'aldéhyde est choisi dans le groupe constitué par: l'heptaldehyde, l'octylaldehyde, le nonyl aldehyde, le decaldehyde, l'undecaldehyde, le dodecyl aldehyde, le palmitaldehyde, et le stearaldehyde.

11. Composition polyamide comprenant au moins un composé phénolique polymère selon l'une quelconque des revendications 1 à 5.

12. Composition selon la revendication 11 comprenant de 1 à 20 % en poids de composé phénolique, par rapport au poids total de la composition.

13. Composition selon les revendications 11 ou 12 comprenant de 30 à 95 % en poids de polyamide, par rapport au poids total de la composition.

14. Composition selon l'une quelconque des revendications 11 à 13 comprenant des charges de renfort ou de remplissages.

15. Composition selon l'une quelconque des revendications 11 à 14 comprenant des agents modifiants la résistance aux chocs.

16. Utilisation d'une composition polyamide selon l'une quelconque des revendications 11 à 15 pour la préparation d'un article moulé ou extrudé.

17. Article moulé ou extrudé à base d'une composition polyamide selon l'une quelconque des revendications 11 à 15.

18. Utilisation d'un composé selon l'une quelconque des revendications 1 à 5 comme agent de renfort de chocs polyamide.

19. Utilisation d'un composé selon l'une quelconque des revendications 1 à 5 pour la fabrication d'un polyamide modifié présentant des propriétés mécaniques augmentées.

## Patentansprüche

1. Polymere Phenolverbindung, umfassend mindestens Einheiten der Formel (I) : 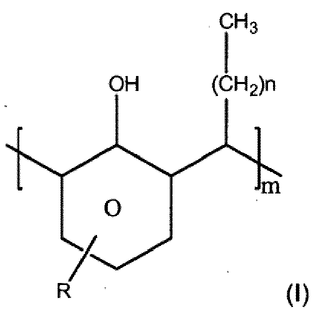 in der R für ein Wasserstoffatom oder eine lineare oder verzweigte Alkylgruppe mit 1 bis 20 Kohlenstoffatomen, die gegebenenfalls Heteroatome umfasst, steht, m zwischen 6 und 15 liegt und n zwischen 5 und 22 liegt.

2. Polymere Phenolverbindung nach Anspruch 1, **dadurch gekennzeichnet, dass** m zwischen 8 und 12 liegt.

3. Polymere Phenolverbindung nach Anspruch 1 oder 2, **dadurch gekennzeichnet, dass** n zwischen 10 und 15 liegt.

4. Polymere Phenolverbindung nach einem der Ansprüche 1 bis 3, ferner umfassend Einheiten der Formel (II) : 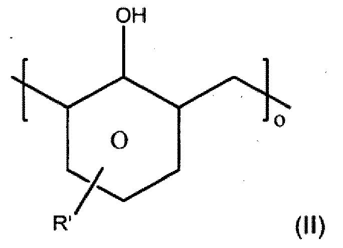 in der R' für ein Wasserstoffatom oder eine lineare oder verzweigte Alkylgruppe mit 1 bis 20 Kohlenstoffatomen, die gegebenenfalls Heteroatome umfasst, steht und o zwischen 6 und 15 liegt.

5. Polymere Phenolverbindung nach einem der Ansprüche 1 bis 4 mit einem Molekulargewicht zwischen 1500 und 3000 g/mol.

6. Verfahren zur Herstellung einer polymeren Phenolverbindung nach einem der Ansprüche 1 bis 5, umfassend mindestens einen Schritt der Kondensation in Gegenwart mindestens einer Phenolverbindung mit einem Aldehyd mit 7 bis 25 Kohlenstoffatomen.

7. Verfahren nach Anspruch 6, **dadurch gekennzeichnet, dass** der Kondensationsschritt in Gegenwart mindestens einer Phenolverbindung mit einem Aldehyd mit 7 bis 25 Kohlenstoffatomen und Formaldehyd durchgeführt wird.

8. Verfahren nach Anspruch 6 oder 7, **dadurch gekennzeichnet, dass** die Temperatur des Kondensationsschritts zwischen 50 und 250°C liegt.

9. Verfahren nach einem der Ansprüche 6 bis 8, **dadurch gekennzeichnet, dass** die Phenolverbindung aus der Gruppe bestehend aus Phenol, Kresol, Xylenol, Naphthol, Butylphenol, tert.-Butylphenol, Isooctylphenol, Nitrophenol, Phenylphenol, Resorcinol und Bisphenol-A ausgewählt wird.

10. Verfahren nach einem der Ansprüche 6 bis 9, **dadurch gekennzeichnet, dass** der Aldehyd aus der Gruppe bestehend aus Heptaldehyd, Octylaldehyd, Nonylaldehyd, Decaldehyd, Undecaldehyd, Dodecylaldehyd, Palmitaldehyd und Stearaldehyd ausgewählt wird.

11. Polyamidzusammensetzung, umfassend mindestens eine polymere Phenolverbindung nach einem der Ansprüche 1 bis 5.

12. Zusammensetzung nach Anspruch 11, umfassend 1 bis 20 Gew.- % Phenolverbindung, bezogen auf das Gesamtgewicht der Zusammensetzung.

13. Zusammensetzung nach Anspruch 11 oder 12, umfassend 30 bis 95 Gew.- % Polyamid, bezogen auf das Gesamtgewicht der Zusammensetzung.

14. Zusammensetzung nach einem der Ansprüche 11 bis 13, umfassend verstärkende oder streckende Füllstoffe.

15. Zusammensetzung nach einem der Ansprüche 11 bis 14, umfassend die Schlagzähigkeit modifizierende Mittel.

16. Verwendung einer Polyamidzusammensetzung nach einem der Ansprüche 11 bis 15 zur Herstellung eines Formkörpers oder Extrudats.

17. Formkörper oder Extrudat auf Basis einer Polyamidzusammensetzung nach einem der Ansprüche 11 bis 15.

18. Verwendung einer Zusammensetzung nach einem der Ansprüche 1 bis 5 als Schlagzähigkeitsverbesserer für das Polyamid.

19. Verwendung einer Zusammensetzung nach einem der Ansprüche 1 bis 5 zur Herstellung eines modifizierten Polyamids mit verbesserten mechanischen Eigenschaften.

## Claims

1. Polymeric phenolic compound comprising at least units of formula (I) : 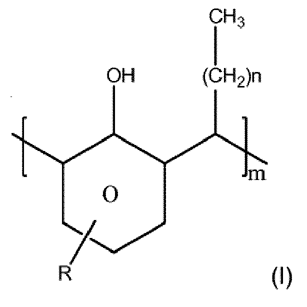 in which R represents a hydrogen atom or a linear or branched alkyl group comprising from 1 to 20 carbon atoms and optionally comprising heteroatoms, m is between 6 and 15 and n is between 5 and 22.

2. Polymeric phenolic compound according to Claim 1, **characterized in that** m is between 8 and 12.

3. Polymeric phenolic compound according to Claim 1 or 2, **characterized in that** n is between 10 and 15.

4. Polymeric phenolic compound according to any one of Claims 1 to 3, additionally comprising units of formula (II) : 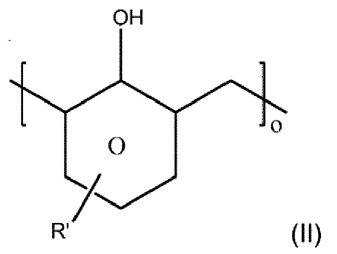 in which R' represents a hydrogen atom or a linear or branched alkyl group comprising from 1 to 20 carbon atoms and optionally comprising heteroatoms, and o is between 6 and 15.

5. Polymeric phenolic compound according to any one of Claims 1 to 4, exhibiting a molecular weight of between 1500 and 3000 g/mol.

6. Process for the manufacture of a polymeric phenolic compound according to any one of Claims 1 to 5, comprising at least one stage of condensation in the presence of at least one phenolic compound with an aldehyde comprising from 7 to 25 carbon atoms.

7. Process according to Claim 6, **characterized in that** the condensation stage is carried out in the presence of at least one phenolic compound with an aldehyde comprising from 7 to 25 carbon atoms and formaldehyde.

8. Process according to Claim 6 or 7, **characterized in that** the temperature of the condensation stage is between 50 and 250°C.

9. Process according to any one of Claims 6 to 8, **characterized in that** the phenolic compound is chosen from the group consisting of phenol, cresol, xylenol, naphthol, butylphenol, (tert-butyl)phenol, isooctylphenol, nitrophenol, phenylphenol, resorcinol and bisphenol A.

10. Process according to any one of Claims 6 to 9, **characterized in that** the aldehyde is chosen from the group consisting of heptaldehyde, octyl aldehyde, nonyl aldehyde, decaldehyde, undecaldehyde, dodecyl aldehyde, palmitaldehyde and stearaldehyde.

11. Polyamide composition comprising at least one polymeric phenolic compound according to any one of Claims 1 to 5.

12. Composition according to Claim 11, comprising from 1 to 20 % by weight of phenolic compound, with respect to the total weight of the composition.

13. Composition according to Claim 11 or 12, comprising from 30 to 95 % by weight of polyamide, with respect to the total weight of the composition.

14. Composition according to any one of Claims 11 to 13, comprising reinforcing or bulking fillers.

15. Composition according to any one of Claims 11 to 14, comprising agents which modify the impact strength.

16. Use of a polyamide composition according to any one of Claims 11 to 15 in the preparation of a molded or extruded article.

17. Molded or extruded article based on a polyamide composition according to any one of Claims 11 to 15.

18. Use of a compound according to any one of Claims 1 to 5 as impact reinforcer for the polyamide.

19. Use of a compound according to any one of Claims 1 to 5 in the manufacture of a modified polyamide exhibiting enhanced mechanical properties.
